# EUROPÄISCHE PATENTSCHRIFT

(11) **EP 3 573 860 B1**
(45) Veröffentlichungstag und Bekanntmachung des Hinweises auf die Patenterteilung: **27.04.2022**
(21) Anmeldenummer: 18703250.3
(22) Anmeldetag: 25.01.2018
(51) Int. Cl.: B60Q 1/24, B60W 50/00

(54) **DARSTELLEN EINES SOLL-FAHRZEUGÖFFNUNGSVORFELDS EINES AUTOMATISIERTEN FAHRZEUGS**
SHOWING A TARGET VEHICLE OPENING FORE ZONE OF AN AUTOMATED VEHICLE
REPRÉSENTATION D'UNE ZONE THÉORIQUE SITUÉE DEVANT L'OUVERTURE D'UN VÉHICULE AUTOMATISÉ

(30) Priorität: 26.01.2017 DE 102017201289
(43) Veröffentlichungstag der Anmeldung: 04.12.2019
(73) Patentinhaber: Bayerische Motoren Werke Aktiengesellschaft, 80809 München (DE)
(72) Erfinder: SOROKIN, Lenja, 80805 München (DE)
(86) Internationale Anmeldenummer: PCT/EP2018/051829
(87) Internationale Veröffentlichungsnummer: WO 2018/138199

(56) Entgegenhaltungen:
- DE-A1-102013 012 891
- DE-A1-102014 011 811
- DE-A1-102014 116 171
- DE-A1-102015 201 205
- JP-A- 2009 040 236

## Beschreibung

Die Erfindung betrifft ein Verfahren zum Darstellen eines Soll-Fahrzeugöffnungsvorfelds eines automatisierten Fahrzeugs.

Es sind Verfahren bekannt, bei denen ein Fahrer eines Kraftfahrzeugs vor dem Einsteigen in das Fahrzeug durch das Fahrzeug "begrüßt" wird. Hierbei werden beispielsweise verschiedene Lichtelemente aktiviert, die insbesondere das Fahrzeugumfeld beleuchten.

Die DE 10 2013 202 072 A1 beschreibt ein Verfahren zum Ausführen eines Begrüßungsszenarios durch ein Kraftfahrzeug, wobei die Entfernung des Fahrers zum Fahrzeug erfasst wird. Wenn die Entfernung einen Schwellwert erreicht, beziehungsweise unterschreitet, wird dabei eine Lichtfunktion ausgeführt, die zumindest ein Lichtelement aktiviert.

Im Zeitalter des zunehmend automatisierten Fahrens sind Situationen denkbar, in denen ein automatisiertes Fahrzeug sich selbstständig auf seinen Fahrer bzw. seinen potentiellen, zukünftigen Fahrzeugnutzer zubewegt.

Zum weiteren Stand der Technik wird auf die DE 10 2014 011 811 A1 und die DE 10 2013 012 891 A1 verwiesen.

Unter dem Begriff "automatisiertes Fahren" kann ein Fahren mit automatisierter Längs- oder Querführung oder ein autonomes Fahren mit automatisierter Längs- und Querführung verstanden werden. Der Begriff "automatisiertes Fahren" umfasst ein automatisiertes Fahren mit einem beliebigen Automatisierungsgrad, insbesondere ein assistiertes, teilautomatisiertes, hochautomatisiertes, vollautomatisiertes oder fahrerloses Fahren. Beim assistierten Fahren führt der Fahrer dauerhaft die Längs- oder Querführung aus, während das System die jeweils andere Funktion übernimmt. Beim teilautomatisierten Fahrern übernimmt das System die Längs- und Querführung, wobei der Fahrer das System dauerhaft überwachen muss. Beim hochautomatisierten Fahren übernimmt das System die Längs- und Querführung, ohne dass der Fahrer das System dauerhaft überwachen muss; der Fahrer muss aber in einer gewissen Zeit in der Lage sein, die Fahrzeugführung zu übernehmen. Beim vollautomatisierten Fahren kann das System für einen spezifischen Anwendungsfall das Fahren in allen Situationen automatisch bewältigen; für diesen Anwendungsfall ist kein Fahrer mehr erforderlich. Beim fahrerlosen Fahren kann das System während der ganzen Fahrt alle Situationen automatisch bewältigen; ein Fahrer ist generell nicht mehr erforderlich.

In den genannten neuen Situationen bieten konventionelle Verfahren zum Ausführen eines Begrüßungsszenarios dem potentiellen, zukünftigen Fahrzeugnutzer weniger Komfort als in stationären Situationen, in denen sich ein Fahrer auf ein stehendes Fahrzeug zubewegt.

Es ist Aufgabe der Erfindung, ein verbessertes Begrüßungsszenario für ein automatisiertes Fahrzeug anzugeben. Diese Aufgabe wird mit den Merkmalen von Anspruch 1 gelöst.

Ein Aspekt der Erfindung betrifft ein Verfahren zur Darstellung eines Soll-Fahrzeugöffnungsvorfelds für einen potentiellen, zukünftigen Fahrzeugnutzer eines automatisierten Fahrzeugs mittels eines Steuergeräts.

Bei dem Soll-Fahrzeugöffnungsvorfeld kann es sich um einen räumlichen Bereich handeln, den der potentielle, zukünftige Fahrzeugnutzer durchqueren muss, um mit dem Fahrzeug zu interagieren. Beispielsweise kann das Soll-Fahrzeugöffnungsvorfeld die Fläche neben dem Fahrzeug sein, die an zumindest eine Tür des Fahrzeugs angrenzt. Es kann aber auch die Fläche sein, neben der die Tür eines sich noch in der Anfahrt befindenden Fahrzeugs zu stehen kommen wird.

Die Bedeutung des Soll-Fahrzeugöffnungsvorfelds kann insbesondere die eines Einstiegsbereichs oder die eines Beladungsbereichs sein.

Der potentielle, zukünftige Fahrzeugnutzer kann beispielsweise der zukünftige Fahrer des Fahrzeugs sein. Alternativ kann der potentielle, zukünftige Fahrzeugnutzer aber auch nur einen Gegenstand oder ein Tier im Fahrzeug ablegen oder im Auftrag oder zur Unterstützung einer dritten Person mit dem Fahrzeug interagieren, beispielsweise kann der potentielle, zukünftige Fahrzeugnutzer einem Passagier beim Einsteigen behilflich sein.. Alternativ ist auch denkbar, dass ein automatisiertes Fahrzeug in der Lage ist, die Belegung der Sitze in seinem Innenraum auszuwerten, um das Soll-Fahrzeugöffnungsvorfeld derart zu bestimmen, dass dieses nur an die Türen des Fahrzeugs angrenzt, hinter denen sich ein unbelegter Sitz verbirgt.

Der potentielle, zukünftige Fahrzeugnutzer des automatisierten Fahrzeugs wird außerhalb des automatisierten Fahrzeugs schon während der Anfahrt, also vor Erreichen der Halteposition erkannt.

Diese Erkennung kann dabei verschiedene Aspekte umfassen. Beispielsweise kann die räumliche Position des potentiellen, zukünftigen Fahrzeugnutzers erfasst werden. Alternativ oder zusätzlich kann auch eine Feststellung der Identität des zukünftigen, potentiellen Fahrzeugnutzers erfolgen.

Alternativ oder zusätzlich kann auch ein Einstiegswunsch und/oder eine Annahmewahrscheinlich eines potentiellen Mobilitätsangebots erfasst werden. Die Annahmewahrscheinlichkeit kann dabei durch Auswertung zumindest eines der folgenden, den potentiellen, zukünftigen Fahrzeugnutzer betreffenden Kriterien ermittelt werden: Position, Route, Grund der Fortbewegung, Dringlichkeit.

Das automatisierte Fahrzeug kennzeichnet das Soll-Fahrzeugöffnungsvorfeld für den potentiellen, zukünftigen Fahrzeugnutzer während der Hinfahrt zu dem potentiellen, zukünftigen Fahrzeugnutzer vor dem Erreichen einer Halteposition.

Eine Halteposition des automatisierten Fahrzeugs beschreibt dabei einen räumlichen Ort, an dem das automatisierte Fahrzeug zum Stehen kommen wird. Dabei kann es sich beispielsweise um den Ort handeln, an dem sich nach dem Anhalten der Schwerpunkt des Fahrzeugs befindet. Alternativ kann es sich dabei auch um eine Haltelinie, beispielsweise für die Fahrzeugfront, oder um eine Haltefläche für das gesamte Fahrzeug handeln.

Die Kennzeichnung des Soll-Fahrzeugöffnungsvorfelds kann beispielsweise optisch mittels einer Ausgabeeinheit des Fahrzeugs erfolgen. Insbesondere kann die Kennzeichnung mittels zumindest eines Leuchtmittels erfolgen, indem zumindest eine Lichtquelle auf das Soll-Fahrzeugöffnungsvorfeld ausgerichtet und/oder aktiviert wird. Bei der Lichtquelle kann es sich um einen Scheinwerfer beliebiger Technologie handeln, aber auch um einen Projektor oder um ein Display.

Alternativ oder zusätzlich kann die Kennzeichnung auch mittels eines vom potentiellen, zukünftigen Fahrzeugnutzer mitgeführten Geräts erfolgen, insbesondere durch eine Augmented Reality Darstellung.

Darüber hinaus kann die Kennzeichnung auch durch eine Ausgabeeinheit der Infrastruktur erfolgen, beispielsweise durch in die Infrastruktur integrierte Projektoren, Displays oder Leuchtmittel..

In einer vorteilhaften Ausführungsform der Erfindung wird der potentielle, zukünftige Fahrzeugnutzer durch zumindest einen Sensor des automatisierten Fahrzeugs erkannt.

Hierfür können eine Vielzahl von verschiedenen Sensoren zum Einsatz kommen, beispielsweise optische Sensoren wie Kameras. Mittels einer Kamera ist es beispielsweise möglich, eine Personenerkennung durchzuführen und die von der erkannten Person ausgeführten Gesten zu bestimmen. Dabei kann mittels bekannter Bilderverarbeitungsverfahren erkannt werden, wenn eine Person das automatisierte Fahrzeug zu sich winkt oder das automatisierte Fahrzeug mit erhobenem Arm auf sich aufmerksam machen will.

Darüber hinaus ist alternativ oder zusätzlich auch möglich, mittels einer Kamera eine Gesichtserkennung durchzuführen und somit den potentiellen, zukünftigen Fahrzeugnutzer zu identifizieren, sofern ein Bild, dass das Gesicht des potentiellen, zukünftigen Fahrzeugnutzers zeigt, zuvor abgespeichert wurde.

Alternativ oder zusätzlich zu optischen Sensoren können auch akustische Sensoren verwendet werden. Beispielsweise kann ein potentieller, zukünftiger Fahrzeugnutzer das automatisierte Fahrzeug durch lautes Rufen auf sich aufmerksam machen. Dabei können definierte Befehle vorgesehen werden.

Alternativ oder zusätzlich kann der Sensor des automatisierten Fahrzeugs auch Signale eines mobilen Endgeräts entgegen nehmen, um den zukünftigen, potentiellen Fahrzeugnutzer zu erkennen, wobei Erkennungscodes ausgetauscht werden können.

In einer weiteren vorteilhaften Ausführungsform der Erfindung werden mittels des Steuergeräts Informationen von einem elektronischen Gerät des potentiellen, zukünftigen Fahrzeugnutzers entgegengenommen. Mittels der entgegengenommenen Informationen wird der potentielle zukünftige Fahrzeugnutzer erkannt.

Die Entgegennahme der Informationen kann beispielsweise über einen Sensor des Fahrzeugs geschehen, beispielsweise einem Mobilfunk-Empfänger oder einem Empfänger für drahtlose Nahbereichskommunikation.

Bei dem elektronischen Gerät des potentiellen, zukünftigen Fahrzeugnutzers kann es sich beispielsweise um ein mobiles Endgerät wie ein Mobiltelefon, eine Smartwatch, Smart Textiles oder eine Datenbrille handeln. Darüber hinaus kann es sich aber auch um jedes elektronische Gerät handeln, mittels dem der potentielle, zukünftige Fahrzeugnutzer identifiziert werden kann und das Eigenschaften wie beispielsweise den Mobilitätsbedarf des potentiellen, zukünftigen Fahrzeugnutzers bestimmen kann.

Die von dem elektronischen Gerät entgegen genommenen Informationen können beispielsweise zur Identifikation des potentiellen, zukünftigen Fahrzeugnutzers genutzt werden. Dafür kann etwa ein digitales Profil des potentiellen, zukünftigen Fahrzeugnutzers übertragen werden oder aber auch eine kryptografische Signatur. Wenn ein entgegen genommenes, digitales Profil ein Bild des potentiellen, zukünftigen Fahrzeugnutzers umfasst, so kann dieses auch für eine Kamera-basierte Personenerkennung verwendet werden.

Alternativ oder zusätzlich kann auch zumindest eine Information zur Erkennung der räumlichen Position des potentiellen, zukünftigen Fahrzeugnutzers übertragen werden, wie beispielsweise absolute oder relative räumliche Koordinaten.

In einer weiteren vorteilhaften Ausführungsform der Erfindung wird mittels des Steuergeräts eine Information entgegen genommen, und mittels der entgegengenommenen Information die Halteposition des automatisierten Fahrzeugs bestimmt. Bei der Information kann es sich insbesondere um eine räumliche Information und/oder um eine für das Wetter charakteristische Information handeln.

Alternativ oder zusätzlich kann es sich bei der Information insbesondere auch um zumindest ein Merkmal einer digitalen Karte handeln, das relevant für den Einstieg des potentiellen, zukünftigen Fahrzeugnutzers in das automatisierte Fahrzeug ist.

Beispielsweise kann es sich um eine Information handeln, die die Beschaffenheit des Untergrunds charakterisiert. Wenn etwa aufgrund der Beschaffenheit des Untergrunds damit zu rechnen ist, dass der potentielle, zukünftige Fahrzeugnutzer beim Einstieg in das automatisierte Fahrzeug durch eine Pfütze laufen muss, so kann mittels der Information eine andere Halteposition gewählt werden.

Alternativ oder zusätzlich kann es sich bei der Information auch um eine Information über die Benutzung eines Ortes handeln. Beispielsweise kann ein Ort vor einem Hoteleingang als Halteposition ungeeignet sein, da an diesem Ort mit sehr viel Personen- und Fahrzeugverkehrs zu rechnen ist. Mittels der Information kann das automatisierte Fahrzeug eine andere Halteposition auswählen.

Alternativ oder zusätzlich kann es sich bei der räumlichen Information auch um eine Steuerinformation eines Fahrzeugflotten-Steuerungssystems handeln, beispielsweise um zukünftige Haltepunkte der anderen Fahrzeuge in der Fahrzeugflotte.

In einer weiteren vorteilhaften Ausführungsform der Erfindung werden, wenn festgestellt wird, dass der potentielle, zukünftige Fahrzeugnutzer sich nicht in Richtung der Darstellung des Soll-Fahrzeugöffnungsvorfelds für die zukünftige Halteposition des automatisierten Fahrzeugs bewegt, die zukünftige Halteposition des automatisierten Fahrzeugs und/oder die Darstellung des Soll-Fahrzeugöffnungsvorfelds an die festgestellte, tatsächliche Bewegung des potentiellen, zukünftigen Fahrzeugnutzers angepasst.

Hierbei kann sich beispielsweise der potentielle, zukünftige Fahrzeugnutzer einem Wunsch-Fahrzeugöffnungsvorfeld annähern, der etwa für ihn leichter zugänglich ist als das vom automatisierten Fahrzeug vorgesehene Soll-Fahrzeugöffnungsvorfeld. In diesem Fall muss das automatisierte Fahrzeug zum einen eine neue Halteposition bestimmen und seine Bewegungsplanung derart anpassen, dass es diese Halteposition erreichen kann. Zum anderen muss das automatisierte Fahrzeug die Darstellung des Soll-Fahrzeugöffnungsvorfeld derart anpassen, dass dieses im Wesentlichen dem Wunsch-Fahrzeugöffnungsvorfeld des potentiellen, zukünftigen Fahrzeugnutzers entspricht. Bei der Anpassung der Darstellung des Soll-Fahrzeugöffnungsvorfelds kann die Darstellung entweder aktiviert bleiben und somit "wandern", die Darstellung kann aber auch an der ersten ursprünglichen Position ausgeblendet werden und an der neuen Position einfach erscheinen.

Alternativ oder zusätzlich kann der potentielle, zukünftige Fahrzeugnutzer durch eine bewusste, räumliche Positionierung in der Nähe der Darstellung des Soll-Fahrzeugöffnungsvorfelds dem automatisierten Fahrzeug zu verstehen geben, dass er nicht direkt in das Fahrzeug einsteigen will und stattdessen zuerst eine Klappe, z.B. die Heckklappe, des automatisierten Fahrzeugs öffnen möchte. Hierzu kann er sich beispielsweise parallel zur Fahrbahn, entgegen der Fahrtrichtung, hinter der Darstellung des Soll-Fahrzeugöffnungsvorfelds positionieren. Die Erkennung der räumlichen Positionierung des potentiellen, zukünftigen Fahrzeugnutzers kann dabei beispielsweise durch der Sensorik des Fahrzeugs oder durch ein von dem potentiellen, zukünftigen Fahrzeugnutzer mitgeführtes mobiles Endgerät erfolgen.

In diesem Fall kann das automatisierte Fahrzeug die Darstellung des Soll-Fahrzeugöffnungsvorfelds beibehalten aber seine Halteposition derart anpassen, dass nach dem Anhalten des automatisierten Fahrzeugs die von dem potentiellen, zukünftigen Fahrzeugnutzer zu öffnende Klappe sich möglichst nahe an der räumlichen Position des potentiellen, zukünftigen Fahrzeugnutzer befindet.

In einer weiteren vorteilhaften Ausführungsform der Erfindung umfasst die Darstellung des Soll-Fahrzeugöffnungsvorfelds zumindest ein Element, das in Abhängigkeit von einer für das automatisierte Kraftfahrzeug charakteristischen Eigenschaft bestimmt wird.

Bei einem Element des Soll-Fahrzeugöffnungsvorfelds kann es sich um einen Teilbereich der Darstellung des Soll-Fahrzeugöffnungsvorfelds handeln, insbesondere um einen Leuchtflächenanteil, wobei auch die gesamte Darstellung des Soll-Fahrzeugöffnungsvorfelds als Element betrachtet werden kann. Mehrere Elemente können in beliebigen, räumlichen Beziehungen zueinander stehen und beispielsweise aneinander angrenzen oder sich überlagern.

Bei dem Element, das in Abhängigkeit von einer für das automatisierte Kraftfahrzeug charakteristischen Eigenschaft bestimmt wird, kann es sich beispielsweise um ein Symbol, ein Logo, einen Schriftzug oder um eine beliebige Kombination daraus handeln.

Eine charakteristische Eigenschaft des automatisierten Kraftfahrzeugs kann beispielsweise dessen Hersteller oder dessen Modellbezeichnung darstellen. Es kann sich dabei aber auch um eine Eigenschaft des Antriebs des automatisierten Fahrzeugs handeln, beispielsweise um dessen Energiequelle (z.B. Benzin, Diesel, Batterie, Wasserstoff) oder um dessen Leistung. Darüber hinaus kann die charakteristische Eigenschaft auch den Nutzwert des Kraftfahrzeugs beschreiben, beispielsweise die Anzahl der Sitzplätze.

In einer weiteren vorteilhaften Ausführungsform der Erfindung umfasst die Darstellung des Soll-Fahrzeugöffnungsvorfelds zumindest ein Element, das eine Zuordnung der Darstellung des Soll-Fahrzeugöffnungsvorfelds zu dem potentiellen, zukünftigen Fahrzeugnutzer ermöglicht.

Diese Zuordnung kann beispielsweise durch ein räumliches Element hergestellt werden, etwa ein Symbol das in Richtung des potentiellen, zukünftigen Fahrzeugnutzers zeigt. Alternativ oder zusätzlich kann diese Zuordnung auch durch ein textuelles Element hergestellt werden, bei dem etwa der Name des potentiellen, zukünftigen Fahrzeugnutzers oder eine ihm zugewiesene Reservierungsnummer dargestellt wird.

In einer weiteren vorteilhaften Ausführungsform der Erfindung ist das Soll-Fahrzeugöffnungsvorfeld des potentiellen, zukünftigen Fahrzeugnutzers der Weg von der aktuellen, räumlichen Position des Fahrzeugnutzers zur berechneten, zukünftigen Halteposition des automatisierten Fahrzeugs.

Wird das Soll-Fahrzeugöffnungsvorfeld in dieser Ausführungsform beispielsweise mit einem Scheinwerfer dargestellt, so kann der Weg des potentiellen, zukünftigen Fahrzeugnutzers gesamthaft ausgeleuchtet werden.

In einer weiteren vorteilhaften Ausführungsform der Erfindung umfasst die Darstellung des Soll-Fahrzeugöffnungsvorfelds zumindest ein Element, das eine Interaktion des potentiellen, zukünftigen Fahrzeugnutzers mit dem automatisierten Fahrzeug ermöglicht.

Diese Interaktion kann beispielsweise dadurch erfolgen, dass das automatisierte Fahrzeug das Verhalten des potentiellen, zukünftigen Fahrzeugnutzers überwacht und auswertet. Insbesondere kann eine Verhaltensänderung des potentiellen, künftigen Fahrzeugnutzers in Abhängigkeit von der Darstellung des interaktiven Elements ausgewertet werde.

Beispielsweise kann das automatisierte Fahrzeug mittels eines optischen Sensors die Darstellung des interaktiven Elements und zeitgleich den potentiellen, zukünftigen Fahrzeugnutzer überwachen. Dabei kann das interaktive Element beispielsweise eine "Schaltfläche" darstellen, die der potentielle, zukünftige Fahrzeugnutzer mit seinem Fuß "betätigen" kann.

In einer weiteren vorteilhaften Ausführungsform umfasst die Darstellung des Soll-Fahrzeugöffnungsvorfelds zumindest ein erstes Element, das ein Angebot für eine Fahrt mit dem automatisierten Fahrzeug beschreibt. Dieses Angebot kann beispielsweise ein Fahrtziel und einen Fahrpreis umfassen, die textuell oder symbolisch dargestellt werden können. Eine weitere Möglichkeit für ein Angebot des automatisierten Fahrzeugs ist ein Angebot für eine Transportaufgabe. Beispielsweise kann das automatisierte Fahrzeug anbieten, eine dritte Person abzuholen und zum potentiellen, zukünftigen Fahrzeugnutzer zu bringen.

Um die Zeitdauer, während der das Angebot für den potentiellen, zukünftigen Fahrzeugnutzer sichtbar ist, zu erhöhen, kann das automatisierte Fahrzeug seine Geschwindigkeit verringern, solange sich der potentielle, zukünftige Fahrzeugnutzer in Reichweite des Aktors befindet, der zur Darstellung des Soll-Fahrzeugöffnungsvorfelds genutzt wird. Wird das Angebot über eine längeren Zeitraum ignoriert, so kann dieses beispielsweise auch wieder zurückgenommen werden.

Die Darstellung des Soll-Fahrzeugöffnungsvorfelds umfasst zumindest ein zweites, interaktives Element, durch das der potentielle, zukünftige Fahrzeugnutzer das Angebot annehmen kann. Das zweite, interaktive Element kann dabei ein von dem ersten Element verschiedenes Element sein. Es kann sich dabei aber auch um das gleiche Element handeln.

Bei Annahme des Angebots durch den potentiellen, zukünftigen Fahrzeugnutzer kann das automatisierte Fahrzeug beispielsweise seine Bewegungsplanung in Abhängigkeit von dem Angebot anpassen, um das Angebot zu erfüllen.

Die Erfindung wird nachfolgend anhand eines Ausführungsbeispiels unter Zuhilfenahme der beigefügten Zeichnung beschrieben. In dieser zeigen:
- Fig. 1a: Komponenten einer beispielhaften Steuervorrichtung.
- Fig. 1b: ein beispielhaftes Kraftfahrzeug mit integrierter Steuervorrichtung.
- Fig. 2a: einen ersten Zeitpunkt eines Ausführungsbeispiel des erfindungsgemäßen Verfahrens.
- Fig. 2b: einen zweiten Zeitpunkt des Ausführungsbeispiel des erfindungsgemäßen Verfahrens.
- Fig. 3: eine erfindungsgemäße Darstellung eines Soll-Fahrzeugöffnungsvorfelds eines Kraftfahrzeugs, bestehend aus mehreren Elementen.

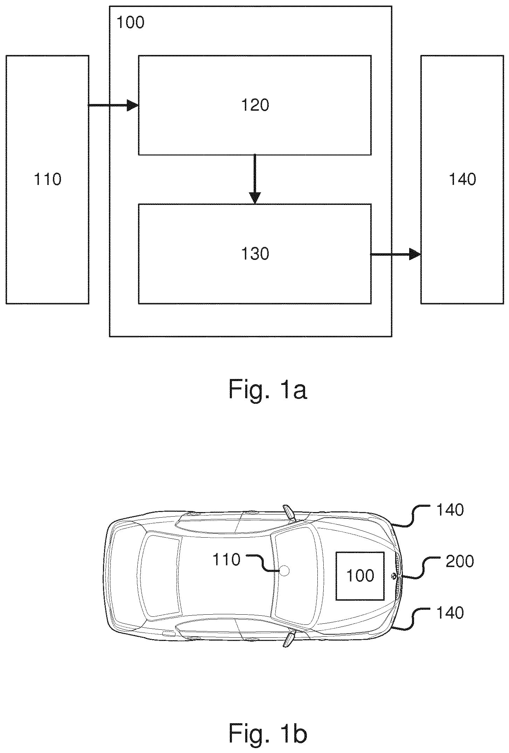

Fig. 1a zeigt Komponenten einer beispielhaften Steuervorrichtung. Die Steuervorrichtung umfasst dabei zumindest einen Sensor 110, bei dem es sich beispielsweise um eine Kamera handeln kann. Der Sensor 110 kommuniziert mit einem ein einem Steuergerät 100 integriertem Fahrzeugnutzer-Erkennungsmodul 120, das dazu eingerichtet ist, den potentiellen, zukünftigen Fahrzeugnutzer in den Sensordaten des Sensors 110 zu erkennen. Diese Erkennung kann dabei sowohl die Bestimmung der räumlichen Position des potentiellen, zukünftigen Fahrzeugnutzers, als auch dessen Identifizierung umfassen.

Das Passager-Erkennungsmodul 120 kommuniziert wiederrum mit einem Fahrzeugöffnungsvorfeld-Darstellungsmodul 130. Dieses Fahrzeugöffnungsvorfeld-Darstellungsmodul 130 ist eingerichtet, um eine geeignete Darstellungsform und -art des Soll-Fahrzeugöffnungsvorfelds zu bestimmen. Mittels zumindest eines Aktors 140 wird das Soll-Fahrzeugöffnungsvorfeld dann gekennzeichnet. Bei dem Aktor 140 kann es sich beispielsweise um einen bereits in konventionellen Fahrzeugen vorhandenen Aktor handeln, etwa um einen Scheinwerfer. Es kann dafür aber auch ein neuartiger Aktor zum Einsatz kommen wie beispielsweise ein Lichtprojektor.

Fig. 1b zeigt ein Kraftfahrzeug 200 mit einer integrierten Steuervorrichtung. Die Steuervorrichtung umfasst einen Sensor 110, beispielsweise eine Kamera, auf dessen Daten ein Steuergerät 100 zur Erkennung des potentiellen, zukünftigen Fahrzeugnutzers zugreift. Nach Berechnung des Soll-Fahrzeugöffnungsvorfelds steuert das Steuergerät 100 die Scheinwerfer 140 des Fahrzeugs 200 an, um das Soll-Fahrzeugöffnungsvorfeld auszuleuchten.

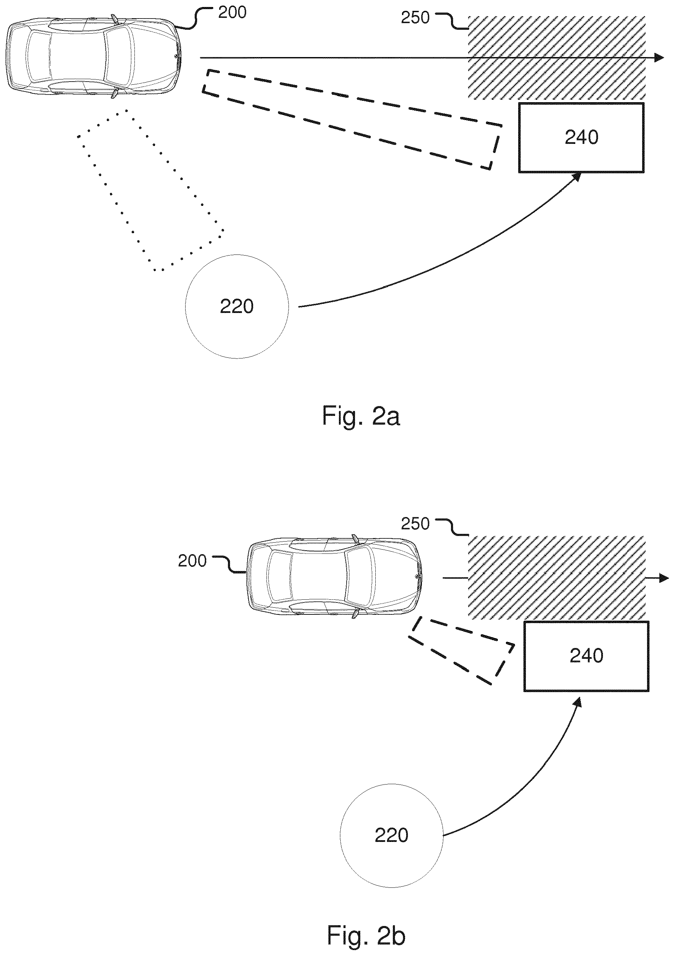

Fig. 2a zeigt ein Ausführungsbeispiel des erfindungsgemäßen Verfahrens zu einem ersten Zeitpunkt. Das automatisierte Kraftfahrzeug 200 erkennt dabei mittels seiner Sensorik 110 und seinem Fahrzeugnutzer-Erkennungsmodul 120 den potentiellen, zukünftigen Fahrzeugnutzer 220. Dieser kann beispielsweise eine Fahrt mit dem automatisierten Fahrzeug 200 über eine Online-Plattform gebucht haben.

Nach der Erkennung des zukünftigen Fahrzeugnutzers 220 bestimmt das automatisierte Fahrzeug 200 mit seinem Fahrzeugöffnungsvorfeld-Darstellungsmodul 130 eine geeignete Darstellungsart zur Kennzeichnung des Soll-Fahrzeugöffnungsvorfelds 240 für den potentiellen, zukünftigen Fahrzeugnutzer 220 in Abhängigkeit von seiner vorgesehenen Halteposition 250. Mithilfe eines Aktors 140, beispielsweise eines Scheinwerfers, kennzeichnet das automatisierte Fahrzeug das Soll-Fahrzeugöffnungsvorfeld 240 für den potentiellen, zukünftigen Fahrzeugnutzer 220.

Fig. 2b zeigt einen zweiten Zeitpunkt des Ausführungsbeispiels des erfindungsgemäßen Verfahrens. Darin ist dargestellt, dass das automatisierte Fahrzeug 200 sich zwischenzeitlich der vorgesehenen Halteposition 250 und dem Soll-Fahrzeugöffnungsvorfeld 240 weiter angenähert hat. Auch der potentielle, zukünftige Fahrzeugnutzer 220 hat sich dem Soll-Fahrzeugöffnungsvorfeld 240 angenähert. Die Kennzeichnung des Soll-Fahrzeugöffnungsvorfelds 240 wird kontinuierlich durch das Fahrzeugöffnungsvorfeld-Darstellungsmodul 130 an die Bewegung des automatisierten Fahrzeugs 200 angepasst, um eine ortsfeste Darstellung des Soll-Fahrzeugöffnungsvorfelds 240 zu erreichen.

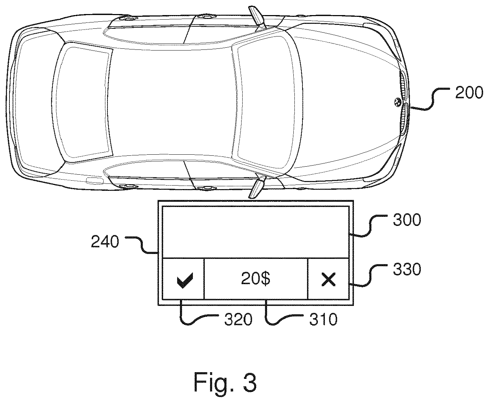

Fig. 3 zeigt eine erfindungsgemäße Darstellung eines Soll-Fahrzeugöffnungsvorfelds 240 eines Kraftfahrzeugs 200, bestehend aus mehreren Elementen 300, 310, 320, 330. Das Soll-Fahrzeugöffnungsvorfeld 240 kann dabei beispielsweise durch eine Licht-Projektion dargestellt werden.

Ein erstes Element 300 des Soll-Fahrzeugöffnungsvorfelds 240 dient der Ausleuchtung des Bodens an der Stelle, an der die Fahrzeugtüren einer Fahrzeugseite zum Stehen kommen werden. Neben der Funktion für den potentiellen, zukünftigen Fahrzeugnutzer 220, diesen über die räumliche Position des Fahrzeugöffnungsvorfelds 240 zu informieren, können dadurch auch eventuelle vorhandene Hindernisse wie z.B. Pfützen besser sichtbar gemacht werden.

Ein zweites Element 310 stellt ein an Angebot des automatisierten Fahrzeugs 200 an den potentiellen, zukünftigen Fahrzeugnutzer 220 dar. In diesem beispielhaften Fall kann das Angebot etwa darüber lauten, dass das automatisierte Fahrzeug 200 den potentiellen, zukünftigen Fahrzeugnutzer 220 für eine Gebühr von 20$ transportieren könnte.

Darüber hinaus umfasst die Darstellung des Soll-Fahrzeugöffnungsvorfelds 240 noch ein drittes, interaktives Element 320 und ein viertes, interaktives Element 330.

Mittels des dritten, interaktiven Elements 320 kann der potentielle, zukünftige Fahrzeugnutzer 220 das Angebot des automatisierten Fahrzeugs 200 annehmen. Diese Willensäußerung kann er beispielsweise dadurch von sich geben, indem er mit seinem Fuß auf den im dritten, interaktiven Element 320 dargestellten Haken tritt.

Mittels des vierten, interaktiven Elements 330 kann der potentielle, zukünftige Fahrzeugnutzer 220 das Angebot des automatisierten Fahrzeugs 200 ablehnen. Die Bedienung des vierten, interaktiven Elements 330 kann dabei analog zur Bedienung des dritten, interaktiven Elements 320 geschehen.

## Patentansprüche

1. Verfahren zur Darstellung eines Soll-Fahrzeugöffnungsvorfelds (240) für einen potentiellen, zukünftigen Fahrzeugnutzer (220) eines automatisierten Fahrzeugs (200) mittels eines Steuergeräts (100), wobei mittels zumindest eines vom Steuergerät (100) ansteuerbaren Aktors (140) des automatisierten Fahrzeugs (200) das Soll-Fahrzeugöffnungsvorfeld (240) für den potentiellen, zukünftigen Fahrzeugnutzer (220) während der Hinfahrt zu dem potentiellen, zukünftigen Fahrzeugnutzer (220) vor dem Erreichen einer Halteposition (250) gekennzeichnet wird, nachdem der potentielle, zukünftige Fahrzeugnutzer (220) des automatisierten Fahrzeugs (200) außerhalb des automatisierten Fahrzeugs (200) erkannt (210) wurde.

2. Verfahren nach einem der vorherigen Ansprüche, wobei der potentielle, zukünftige Fahrzeugnutzer (220) durch zumindest einen Sensor (110) des automatisierten Fahrzeugs (200) erkannt wird.

3. Verfahren nach einem der vorherigen Ansprüche, wobei mittels des Steuergeräts (100) Informationen von einem elektronischen Gerät des potentiellen, zukünftigen Fahrzeugnutzers (220) direkt oder indirekt über einen Server entgegengenommen werden, und mittels der entgegengenommenen Informationen der potentielle zukünftige Fahrzeugnutzer (220) erkannt (210) wird.

4. Verfahren nach einem der vorherigen Ansprüche, wobei mittels des Steuergeräts (100) eine Information entgegen genommen wird, und mittel der entgegengenommenen Information die Halteposition (250) des automatisierten Fahrzeugs (200) bestimmt wird.

5. Verfahren nach einem der vorherigen Ansprüche, wobei, wenn festgestellt wird, dass der potentielle, zukünftige Fahrzeugnutzer (220) sich nicht in Richtung der Darstellung des Soll-Fahrzeugöffnungsvorfelds (240) für die zukünftige Halteposition (250) des automatisierten Fahrzeugs (200) bewegt, die zukünftige Halteposition (250) des automatisierten Fahrzeugs (200) und/oder die Darstellung des Soll-Fahrzeugöffnungsvorfelds (240) an die festgestellte, tatsächliche Bewegung des potentiellen, zukünftigen Fahrzeugnutzers (220) angepasst werden.

6. Verfahren nach einem der vorherigen Ansprüche, wobei die Darstellung des Soll-Fahrzeugöffnungsvorfelds (240) zumindest ein Element umfasst, das in Abhängigkeit von einer für das automatisierte Kraftfahrzeug (200) charakteristischen Eigenschaft bestimmt wird.

7. Verfahren nach einem der vorherigen Ansprüche, wobei die Darstellung des Soll-Fahrzeugöffnungsvorfelds (240) zumindest ein Element umfasst, das eine Zuordnung der Darstellung des Soll-Fahrzeugöffnungsvorfelds (240) zu dem potentiellen, zukünftigen Fahrzeugnutzer (220) ermöglicht.

8. Verfahren nach einem der vorherigen Ansprüche, wobei das Soll-Fahrzeugöffnungsvorfeld (240) des potentiellen, zukünftigen Fahrzeugnutzers (220) der Weg von der aktuellen, räumlichen Position des potentiellen, zukünftigen Fahrzeugnutzers (220) zur berechneten, zukünftigen Halteposition (250) des automatisierten Fahrzeugs (200) ist.

9. Verfahren nach einem der vorherigen Ansprüche, wobei die Darstellung des Soll-Fahrzeugöffnungsvorfelds (240) zumindest ein Element (320, 330) umfasst, das eine Interaktion des potentiellen, zukünftigen Fahrzeugnutzers (220) mit dem automatisierten Fahrzeug (200) ermöglicht.

10. Verfahren nach Anspruch 9, wobei
- die Darstellung des Soll-Fahrzeugöffnungsvorfelds (240) zumindest ein erstes Element (310) umfasst, das ein Angebot für eine Fahrt mit dem automatisierten Fahrzeug (200) beschreibt,
- die Darstellung des Soll-Fahrzeugöffnungsvorfelds (240) zumindest ein zweites, interaktives Element (320) umfasst, durch das der potentielle, zukünftige Fahrzeugnutzer (220) das Angebot annehmen kann, und
- das automatisierte Fahrzeug (200) bei Annahme des Angebots durch den potentiellen, zukünftigen Fahrzeugnutzer (220) gegebenenfalls seine Bewegungsplanung in Abhängigkeit von dem Angebot verändert.

## Claims

1. Method for displaying a target vehicle opening fore zone (240) for a potential, future vehicle user (220) of an automated vehicle (200) by means of a controller (100), wherein the target vehicle opening fore zone (240) for the potential, future vehicle user (220) is indicated by means of at least one actuator (140) of the automated vehicle (200) that is actuatable by the controller (100) during the journey to the potential, future vehicle user (220) before a stopping position (250) is reached and after the potential, future vehicle user (220) of the automated vehicle (200) was identified (210) outside of the automated vehicle (200).

2. Method according to any one of the preceding claims, wherein the potential, future vehicle user (220) is identified by at least one sensor (110) of the automated vehicle (200).

3. Method according to either of the preceding claims, wherein information items from an electronic appliance of the potential, future vehicle user (220) are received directly or indirectly via a server by means of the controller (100) and the potential, future vehicle user (220) is identified (210) by means of the received information items.

4. Method according to any one of the preceding claims, wherein an information item is received by means of the controller (100) and the stopping position (250) of the automated vehicle (200) is determined by means of the received information item.

5. Method according to any one of the preceding claims, wherein the future stopping position (250) of the automated vehicle (200) and/or the display of the target vehicle opening fore zone (240) are adapted to the determined, actual movement of the potential, future vehicle user (220) should it be determined that the potential, future vehicle user (220) is not moving in the direction of the display of the target vehicle opening fore zone (240) for the future stopping position (250) of the automated vehicle (200) .

6. Method according to any one of the preceding claims, wherein the display of the target vehicle opening fore zone (240) comprises at least one element that is determined depending on a property characteristic to the automated motor vehicle (200).

7. Method according to any one of the preceding claims, wherein the display of the target vehicle opening fore zone (240) comprises at least one element that facilitates an assignment of the display of the target vehicle opening fore zone (240) to the potential, future vehicle user (220).

8. Method according to any one of the preceding claims, wherein the target vehicle opening fore zone (240) for the potential, future vehicle user (220) is the path from the current, spatial position of the potential, future vehicle user (220) to the calculated, future stopping position (250) of the automated vehicle (200).

9. Method according to any one of the preceding claims, wherein the display of the target vehicle opening fore zone (240) comprises at least one element (320, 330) that facilitates an interaction of the potential, future vehicle user (220) with the automated vehicle (200).

10. Method according to Claim 9, wherein
- the display of the target vehicle opening fore zone (240) comprises at least one first element (310) that describes an offer for a journey with the automated vehicle (200),
- the display of the target vehicle opening fore zone (240) comprises at least one second, interactive element (320), by means of which the potential, future vehicle user (220) can accept the offer, and
- the automated vehicle (200) optionally modifies its movement plan depending on the offer if the offer is accepted by the potential, future vehicle user (220).

## Revendications

1. Procédé de représentation d'une zone théorique située devant l'ouverture d'un véhicule (240) pour un futur utilisateur de véhicule (220) potentiel d'un véhicule automatisé (200) au moyen d'un appareil de commande (100), dans lequel, au moyen d'au moins un actionneur (140) du véhicule automatisé (200), pouvant être piloté par l'appareil de commande (100), la zone théorique située devant l'ouverture d'un véhicule (240) est identifiée pour le futur utilisateur de véhicule (220) potentiel pendant le trajet aller jusqu'au futur utilisateur de véhicule (220) potentiel avant d'atteindre une position d'arrêt (250), après que le futur utilisateur de véhicule (220) potentiel du véhicule automatisé (200) a été reconnu (210) à l'extérieur du véhicule automatisé (200).

2. Procédé selon l'une quelconque des revendications précédentes, dans lequel le futur utilisateur de véhicule (220) potentiel est reconnu par au moins un capteur (110) du véhicule automatisé (200).

3. Procédé selon l'une quelconque des revendications précédentes, dans lequel l'appareil de commande (100) reçoit des informations d'un appareil électronique du futur utilisateur de véhicule (220) potentiel directement ou indirectement par l'intermédiaire d'un serveur, et le futur utilisateur de véhicule (220) potentiel est reconnu (210) au moyen des informations reçues.

4. Procédé selon l'une quelconque des revendications précédentes, dans lequel l'appareil de commande (100) reçoit une information, et la position d'arrêt (250) du véhicule automatisé (200) est déterminée au moyen de l'information reçue.

5. Procédé selon l'une quelconque des revendications précédentes, dans lequel, lorsqu'il est constaté que le futur utilisateur de véhicule (220) potentiel ne se déplace pas en direction de la représentation de la zone théorique devant l'ouverture d'un véhicule (240) pour la future position d'arrêt (250) du véhicule automatisé (200), la future position d'arrêt (250) du véhicule automatisé (200) et/ou la représentation de la zone théorique devant l'ouverture d'un véhicule (240) est/sont adaptée(s) au déplacement réel constaté du futur utilisateur de véhicule (220) potentiel.

6. Procédé selon l'une quelconque des revendications précédentes, dans lequel la représentation de la zone théorique devant l'ouverture d'un véhicule (240) comprend au moins un élément qui est déterminé en fonction d'une propriété caractéristique du véhicule automobile automatisé (200).

7. Procédé selon l'une quelconque des revendications précédentes, dans lequel la représentation de la zone théorique devant l'ouverture d'un véhicule (240) comprend au moins un élément qui permet une affectation de la représentation de la zone théorique devant l'ouverture d'un véhicule (240) au futur utilisateur de véhicule (220) potentiel.

8. Procédé selon l'une quelconque des revendications précédentes, dans lequel la zone théorique devant l'ouverture d'un véhicule (240) du futur utilisateur de véhicule (220) potentiel est le chemin de la position spatiale actuelle du futur utilisateur de véhicule (220) potentiel jusqu'à la future position d'arrêt (250) calculée du véhicule automatisé (200).

9. Procédé selon l'une quelconque des revendications précédentes, dans lequel la représentation de la zone théorique devant l'ouverture d'un véhicule (240) comprend au moins un élément (320, 330) qui permet une interaction du futur utilisateur de véhicule (220) potentiel avec le véhicule automatisé (200).

10. Procédé selon la revendication 9, dans lequel
- la représentation de la zone théorique devant l'ouverture d'un véhicule (240) comprend au moins un premier élément (310) qui décrit une proposition de voyage avec le véhicule automatisé (200),
- la représentation de la zone théorique devant l'ouverture d'un véhicule (240) comprend au moins un deuxième élément interactif (320) par lequel le futur utilisateur de véhicule (220) potentiel peut accepter la proposition, et
- si la proposition est acceptée par le futur utilisateur de véhicule (220) potentiel, le véhicule automatisé (200) modifie le cas échéant sa planification de déplacement en fonction de la proposition.
